Europäisches Patentamt

European Patent Office

Office européen des brevets

(19)

(11) Veröffentlichungsnummer: **0 007 886**
**B1**

# (12) EUROPÄISCHE PATENTSCHRIFT

(45) Veröffentlichungstag der Patentschrift:
14.07.82

(21) Anmeldenummer: 79810056.6

(22) Anmeldetag: 26.06.79

(51) Int. Cl.³: **G 01 C 3/04,** G 01 S 17/02,
G 08 C 17/00

(54) Verfahren zur Messung der Relativlage, sowie Einrichtung zur Durchführung des Verfahrens.

(30) Priorität: 20.07.78 CH 7819/78

(43) Veröffentlichungstag der Anmeldung:
06.02.80 Patentblatt 80/3

(45) Bekanntmachung des Hinweises auf die Patenterteilung:
14.07.82 Patentblatt 82/28

(84) Benannte Vertragsstaaten:
DE GB SE

(56) Entgegenhaltungen:
DE-A-2 334 639
DE-A-2 750 933
FR-A-1 543 255
FR-A-2 164 437
US-A-3 315 257
US-A-3 874 087
OPTICAL AND QUANTUM ELECTRONICS,
Vol. 7, Nr. 3, Mai 1975,
London, GB,
C. L. FRUSH: »A new lidar signal processor using digital
techniques to provide real-time display«

(73) Patentinhaber: KERN & CO. AG Werke für
Präzisionsmechanik Optik und Elektronik,
CH-5001 Aarau (CH)

(72) Erfinder: Aeschlimann, Heinz, Dr., Adelbändli 1,
CH-5000 Aarau (CH)

(74) Vertreter: Seeger, Jan, c/o Kern & Co. AG,
CH-5001 Aarau (CH)

**0 007 886**

Verfahren zur Messung der Relativlage, sowie Einrichtung zur Durchführung des Verfahrens

Die Erfindung betrifft ein Verfahren zur Messung der Relativlage zwischen einem ersten Punkt und einer Reihe von zweiten Punkten mit Übertragung elektromagnetischer Wellen zwischen den Punkten, bei dem am ersten Punkt aus den übertragenen elektromagnetischen Wellen Richtung und Distanz der zweiten Punkte ermittelt und die Meßwerte sowie weitere Informationen registriert werden; sowie Vorrichtungen zu dessen Durchführung.

In der Vermessungstechnik besteht bei der Lagebestimmung von Punkten im Feld mittels optischer Ziel- und Distanzmeßgeräte für den Beobachter die Aufgabe, pro Zielung einen Datenblock aufzubereiten, der alle notwendigen Meßwerte und alle erforderlichen Zusatzinformationen umfaßt. Die Zusatzinformationen über den Zielpunkt müssen gemäß dem Stand der Technik vom Meßgehilfen über Funk oder durch Zurufen dem Beobachter am Meßgerät übermittelt werden. Bei mehreren Meßgehilfen an verschiedenen Zielpunkten führt dieser Nachrichtenverkehr, insbesondere bei Funkverkehr, zu einer Mehrarbeit des Beobachters, die von einem gewissen Umfang ab von einem besonderen Mann übernommen werden muß.

Aus der DE-OS 2 750 933 (Hewlett-Packard Co.) ist bereits ein Tachymeter bekannt, das einen Prozessor, ein Tastenfeld und mehrere Register umfaßt. Damit ist es der Bedienungsperson möglich, am ersten Punkt Distanz- und Richtungswerte, sowie Korrekturgrößen, z. B. Horizontierungsfehler, Lichtgeschwindigkeits-Korrekturfaktor zu speichern und durch Auswahl gewünschter Meßfolgen und Korrekturberechnungen den Distanz- und Richtungswerten die Korrekturgrößen zuzuordnen. Eine Aufbereitung von Meßwerten und an den Zielpunkten vorliegenden und diese betreffenden weiteren Informationen in Datenblöcken ist jedoch mit dem bekannten Tachymeter weder möglich noch beabsichtigt, eine alphanumerische Eingabe ist hier gar nicht möglich.

Aufgabe der Erfindung ist es daher, ein Verfahren sowie Vorrichtungen zu dessen Durchführung anzugeben, welche den Beobachter beim Nachrichtenverkehr entlasten und die Wahrscheinlichkeit des Auftretens von Übertragungsfehlern vermindern.

Diese Aufgabe wird bei einem Verfahren der eingangs genannten Art dadurch gelöst, daß die am ersten Punkt ermittelten Distanz- und Richtungsinformationen durch Modulation der elektromagnetischen Wellen, zu den zweiten Punkten übertragen und dort zusammen mit weiteren, die zweiten Punkte betreffenden Informationen, die an diesen Punkten vorliegen oder dort erfaßt werden, registriert werden.

Eine erfindungsgemäße Vorrichtung zur Durchführung dieses Verfahrens mit Mitteln am ersten Punkt zur gerichteten Übertragung modulierter elektromagnetischer Wellen mit einer Wellenlänge zwischen 100 μm und 0,1 μm zu den zweiten Punkten, Mitteln an den zweiten Punkten zum Zurückstrahlen der modulierten Wellen zum ersten Punkt, Mitteln am ersten Punkt zur Gewinnung der Distanz zu den zweiten Punkten aus den übertragenen und zurückgestrahlten Wellen, ferner Mitteln zur Übertragung von die Distanz charakterisierenden Signalen zwischen den Punkten mittels modulierter elektromagnetischer Wellen und mit Mitteln am ersten Punkt zur Speicherung von Distanzwerten und Werten von Korrekturgrößen, sowie zur Zuordnung der Korrekturgrößen zu den Distanzwerten ist gekennzeichnet durch Mittel an den zweiten Punkten zur Speicherung der Distanzwerte und von die zweiten Punkte betreffenden weiteren Informationen, die an diesen Punkten vorliegen oder dort erfaßt werden, sowie zur Zuordnung der weiteren Informationen zu den Distanzwerten.

Diese Vorrichtung umfaßt mit Vorteil Mittel am ersten Punkt zum Aufmodulieren der Distanzinformationen auf die der Distanzmessung dienenden elektromagnetischen Wellen. Vorgesehen sind zweckmäßig auch Mittel an den zweiten Punkten zur Rückübertragung der empfangenen Distanzinformationen an den ersten Punkt durch Aufmodulieren auf die zurückgestrahlten elektromagnetischen Wellen.

Eine weitere erfindungsgemäße Vorrichtung mit Mitteln am ersten Punkt zur Messung von Horizontalrichtung und/oder Höhenwinkel der zweiten Punkte und Mitteln zur Übertragung von diese Richtungswerte charakterisierenden Signalen zwischen den Punkten mittels modulierter elektromagnetischer Wellen und mit Mitteln am ersten Punkt zur Speicherung von Richtungswerten und Werten von Korrekturgrößen, sowie zur Zuordnung der Korrekturgrößen zu den Richtungswerten zeichnet sich aus durch Mittel an den zweiten Punkten zur Speicherung der Richtungswerte und von die zweiten Punkte betreffenden weiteren Informationen, die an diesen Punkten vorliegen oder dort erfaßt werden, sowie zur Zuordnung der weiteren Informationen zu den Richtungswerten.

Eine Ausführungsform zeichnet sich aus durch die Kombination der Mittel zur Distanz- und Richtungsbestimmung am ersten Punkt und durch die Übertragung von Distanz- und Richtungsinformationen zwischen den Punkten durch Aufmodulieren auf die der Distanzmessung dienenden elektromagnetischen Wellen.

Eine andere Ausführungsform umfaßt Mittel zur separaten Übertragung der die Distanz- und/oder Richtungswerte charakterisierenden Signale zwischen den Punkten unter Verwendung von elektromagnetischen Wellen im Wellenlängenbereich zwischen 5 und 15 m.

Weitere erfindungsgemäße Ausführungsformen von Vorrichtungen sind in den nachgeordneten Patentansprüchen gekennzeichnet.

Die Erfindung wird nachfolgend anhand von in den Zeichnungen schematisch dargestellten Ausführungsbeispielen näher beschrieben. Es zeigt

Fig. 1 ein modulares Tachymetersystem zur Gewinnung und Übertragung von Lageinformationen,

Fig. 2 eine erfindungsgemäße Gegenstation zum System gemäß Fig. 1 mit Datenspeicher und

Fig. 3 die Struktur des Datenspeichers im einzelnen.

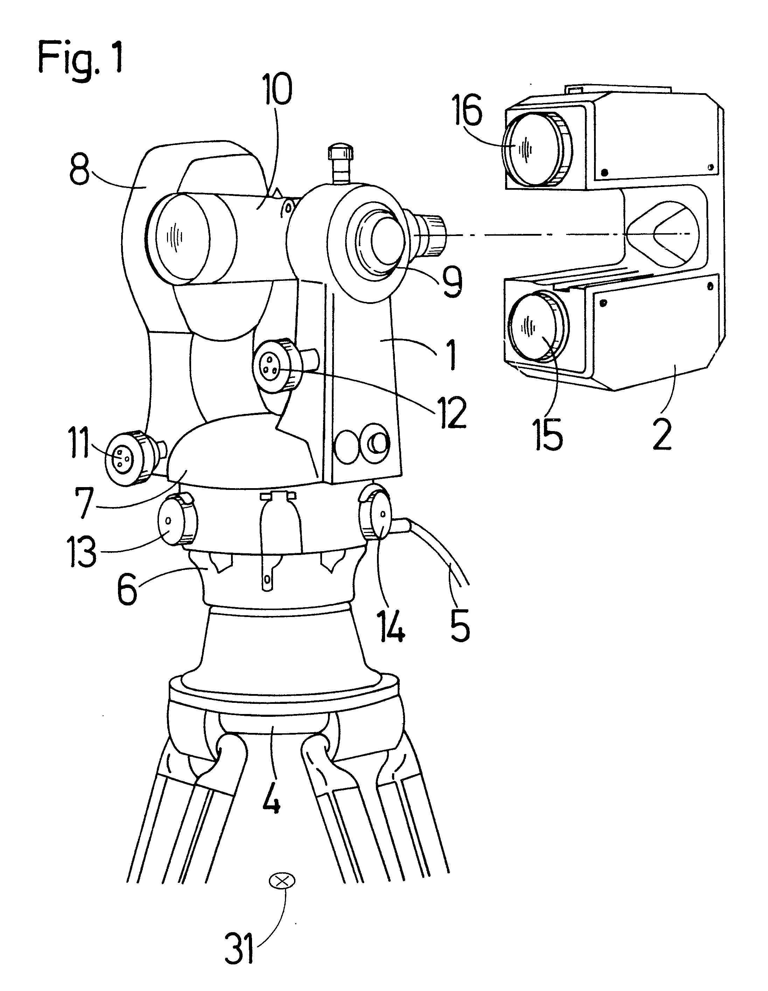

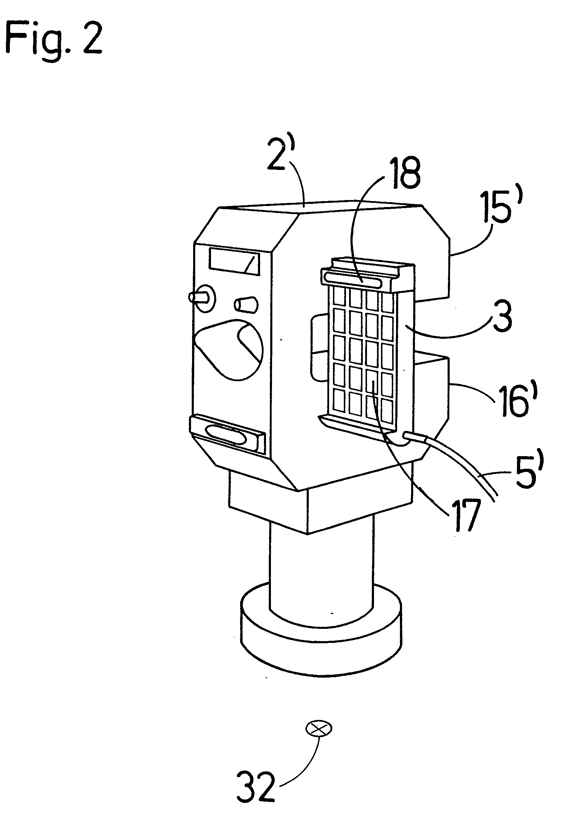

Ein erfindungsgemäßes System zur Datenerfassung im Feld gemäß Fig. 1 und Fig. 2 umfaßt drei wesentliche Komponenten: einen Theodolit 1 mit automatischer Digitalanzeige der Meßwerte, einen auch als aktive Gegenstation 2′ verwendbaren elektrooptischen Entfernungsmesser 2 und einen Datenspeicher 3. Diese Komponenten sind nach Bedarf miteinander kombinierbar; wie in Fig. 1 gezeigt, wird der Distanzmesser 2 zur Messung auf den Theodolit 1 aufgeschoben. Der zusammen mit der Gegenstation dargestellte Datenspeicher 3 kann auch an der Meßstation gemäß Fig. 1 auf den Theodolit aufgesteckt werden.

Im Hinblick auf die Registrierung der Meßwerte und Zusatzdaten auf dem computerkompatiblen Datenspeicher 3 liefern sowohl der Entfernungsmesser 2 als auch der Theodolit 1 die Meßwerte automatisch in digitaler Form. Ausführungsformen für derartige Meßgeräte sind an sich bekannt, sie werden daher hier nicht im einzelnen beschrieben. Der Datenspeicher 3 ist ein Halbleiterspeicher. Er umfaßt einen eingebauten Microcomputer zur Steuerung eines Abfragesystems für die Erfassung von Zusatzinformationen, für die Speicherung der vollständigen Datenblöcke, für die Steuerung eines Such- und Anzeigesystems der gespeicherten Daten und zur Übermittlung dieser Daten in einen Computer an sich bekannter Art.

Die Meßstation gemäß Fig. 1 ist an einem ersten, festen Punkt 31 im Gelände aufgestellt. Dazu dient ein Stativ 4 bekannter Art, auf dem der Theodolit 1 mit elektronischer Erfassung und Ausgabe von Horizontalrichtung und Höhenwinkel montiert ist. Eine elektrische Leitung 5 dient der Zuführung des Betriebsstromes zur feststehenden Basis 6 des Theodoliten 1. Auf der Basis 6 ist das Oberteil 7 mit den Stützen 8 und 9 für das vertikal schwenkbare Zielfernrohr 10 horizontal drehbar gelagert. Stellschrauben 11 bzw. 12 dienen der Einstellung der Horizontalrichtung bzw. des Höhenwinkels des Fernrohres 10, Schrauben 13, 14 und eine dritte nicht sichtbare der Horizontierung der Basis 6 auf dem Stativ 4. Der neben dem Zielfernrohr 10 dargestellte U-förmige elektrooptische Distanzmesser 2 wird zur Messung auf das Fernrohr 10 aufgeschoben und mit diesem gemeinsam auf die Gegenstation 2′ an einem zweiten Punkt 32 im Gelände gerichtet. Der Betriebsstrom wird dem Distanzmesser 2 über Kontaktfedern am Fernrohr 10 zugeführt. Über ein Senderobjektiv 15 werden modulierte infrarote Wellen mit einer Wellenlänge von 0,9 µm zum zweiten Punkt 32 gesendet. Dort nimmt die Gegenstation 2′, welche den gleichen Aufbau wie der Distanzmesser 2 aufweist, die Wellen über ein Empfängerteil 16′ auf und strahlt sie ohne Veränderung von Wellenlänge oder Modulationsphase über ein Senderteil 15′ verstärkt zum ersten Punkt 31 zurück. Anstelle der Gegenstation 2′ kann gemäß dem Stand der Technik auch ein Würfeleckenreflektor verwendet werden, nur werden die Wellen in diesem Fall unverstärkt zurückgestrahlt, und Intensität und Bündelung der Wellen sind vom Zustand des Reflektors abhängig.

Im Distanzmesser 2 werden die zurückgestrahlten Wellen über ein Empfängerobjektiv 16 wieder aufgenommen. Mittels einer eingebauten elektronischen Phasenauswerteeinrichtung wird aus den abgestrahlten und wieder aufgenommenen modulierten Wellen die Distanz zum zweiten Punkt 32 in Form von elektrischen Signalen gebildet.

Der Distanzmesser 2 ist im soweit beschriebenen Ausführungsbeispiel auf die Funktion als aktive Gegenstation 2′ umschaltbar. Bei Verwendung eines oder mehrerer Würfeleckenreflektoren ist diese Funktion natürlich überflüssig. In einem erfindungsgemäßen Meßsystem sind aber im Distanzmesser 2 noch Mittel zur Übertragung der in Form elektrischer Signale vorliegenden Distanz- und Richtungswerte zur Gegenstation 2′ vorhanden, durch welche die der Distanzmessung dienenden infraroten Wellen zusätzlich moduliert werden. Am Ort der Gegenstation werden diese Meßwerte durch den Empfänger 16′ mitempfangen und wieder in elektrische Signale umgesetzt, welche im Datenspeicher 3 gespeichert werden. Dabei ist es zweckmäßig, auch in der Gegenstation 2′ Mittel zur Rückübertragung der Meßwerte über den Meßstrahl zur Meßstation 2 vorzusehen, um dort durch Datenvergleich Übertragungsfehler zu erkennen. Sieht man hingegen gemäß einer weiteren erfindungsgemäßen, aber zeichnerisch nicht dargestellten Variante vor, die Distanz- und/oder Richtungsmeßwerte unter Verwendung von elektromagnetischen Wellen im Meterbereich separat und vom Meßstrahl unabhängig zu übertragen, so kann wegen der größeren Übertragungssicherheit eine Datenrückübertragung entbehrlich sein.

Der Datenspeicher 3 und die Gegenstation 2′ werden über ein Kabel 5′ mit Speisestrom versorgt. Als Halbleiterspeicher erlaubt der Speicher 3 aufgrund des eingebauten Microcomputers bereits eine beschränkte Datenverwaltung. Unter beschränkter Datenverwaltung wird erfindungsgemäß all das verstanden, was dem Beobachter im Feld die Beiordnung von Zusatzinformation zum Meßwert und die Einsicht in die gespeicherten Daten ermöglicht, sowie diejenigen Verfahrensschritte, die zum Aufnehmen der Meßwerte vom Theodolit und vom Distanzmesser und zur Abgabe der gespeicherten Daten an den Computer erforderlich sind.

Die im Datenspeicher 3 unter Kombination von Meßwerten mit Zusatzinformation abgespeicherten

3

Daten sind in Blöcke unterteilt. Ein Datenblock umfaßt diejenige Datenmenge, die durch einen Registrierbefehl abgespeichert wird. Der Vielfalt der zu speichernden Daten entsprechend sind vier verschiedene Typen von Datenblöcken vorgesehen, die je bis zu neun einzelne Werte umfassen. Als erste Werte weist jeder Typ von Datenblock die vom Theodolit 1 und Entfernungsmesser 2 periodisch gesendeten Meßwerte auf. Diese werden durch das im Speicher 3 vorgesehene Aufbereitungsprogramm überall dort, wo sie nicht verwendet werden, unterdrückt. Die verbleibenden sechs Werte jedes Datenblockes stellen die Zusatzinformation dar. Sie werden über eine Tastatur 17 (Fig. 2) eingegeben und erscheinen dabei in einer Anzeige 18 des Datenspeichers 3. Im beschriebenen Ausführungsbeispiel ist jedem dieser sechs Werte in allen vier Typen von Datenblöcken ein zwei- oder dreistelliger, mnemotechnisch sinnfälliger alphanumerischer Code zugeordnet, der gleichzeitig mit dem betreffenden Wert angezeigt wird.

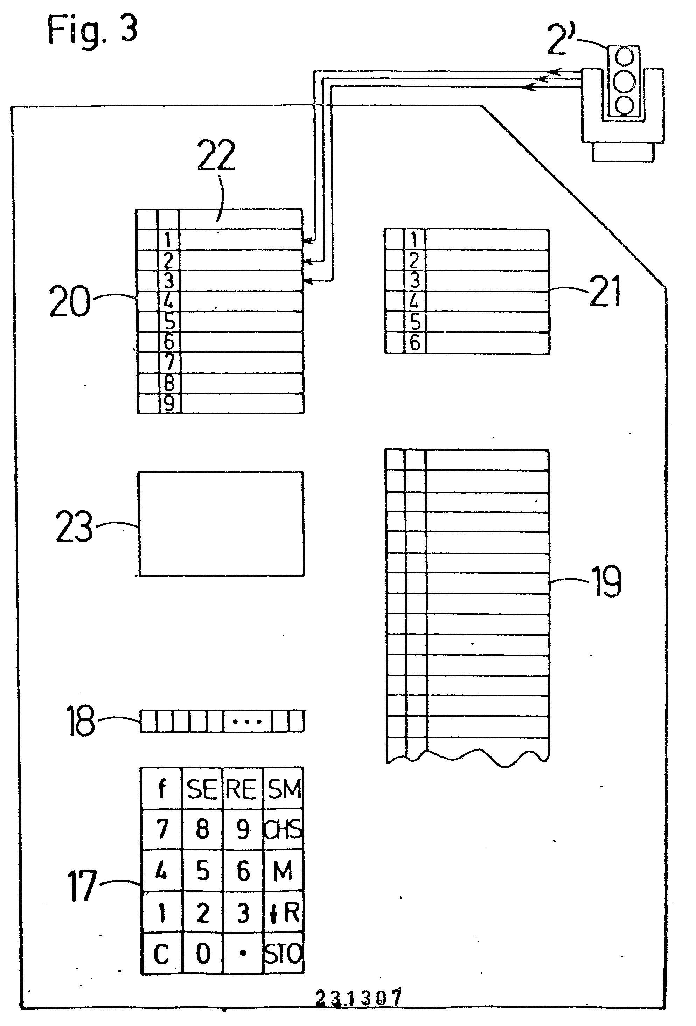

Vor der Registrierung befinden sich die einzelnen eingegebenen Werte jedes Blockes in einem Pufferspeicher, dessen Inhalt so wie der Inhalt eines von Taschenrechnern her bekannten Stack-Registers angezeigt wird (Fig. 3). Auf Tastendruck wird der nächstfolgende Wert angezeigt, ohne daß die Reihenfolge der Werte im Puffer sich ändert.

Zur ökonomischen Ausnutzung der vorhandenen Speicherkapazität ist eine variable Wortlänge und die Unterdrückung aller, sich bei aufeinanderfolgenden Messungen wiederholender Information vorgesehen.

Die Struktur des Datenspeichers 3 ist in Fig. 3 im einzelnen schematisch dargestellt. Der Speicher ist in den eigentlichen Datenspeicher 19 und die beiden Pufferspeicher 20, 21 unterteilt. Der Inhalt des Datenspeichers 19 kann von der Tastatur 17 her nicht verändert werden, der Inhalt von Puffer 21 nur durch einen Speicherbefehl.

Die Aufbereitung der Datenblöcke geschieht im Puffer 20. Die Werte Nr. 1 bis 3 jedes Blockes werden von der Meßstation am ersten Punkt 31 automatisch übertragen. Die Werte Nr. 4 bis 9 werden über die Tastatur 17 in den Puffer 20 eingegeben und können dort noch beliebig verändert werden. Puffer 20 umfaßt ein zusätzliches Register 22, das die laufende Nummer des Datenblocks enthält. In Puffer 21 sind die Werte Nr. 1 bis 6 des vorangehenden Datenblocks zwischengespeichert.

Datenblock »MESSEN«

| Codenummer | angezeigter Code | Bedeutung des Wertes |
|---|---|---|
| 11 | Hor | Horizontalrichtung |
| 12 | ELE | Höhenwinkel |
| 13 | dIS | schiefe Distanz |
| 14 | Pnr | Punktnummer |
| 15 | Pco | Punktcode |
| 16 | SH | Signalhöhe |
| 17 | E-1 | Exzentrizität im Zielpunkt in Richtung zum Tachymeter |
| 18 | E-r | Exzentrizität im Zielpunkt senkrecht zur Richtung zum Tachymeter |
| 19 | Add | Addieren von 1000 m zur schiefen Distanz |

Datenblock »STATIONSDEFINITION«

| Codenummer | angezeigter Code | Bedeutung des Wertes |
|---|---|---|
| 21, 22, 23 | Hor, ELE, dIS | wie Block »MESSEN« |
| 24 | Snr | Stationsnummer |
| 25 | Sco | Stationscode |
| 26 | IH | Instrumentenhöhe |
| 27 | tE | Lufttemperatur |
| 28 | Pr | Luftdruck |
| 29 | | frei verfügbar |

Datenblock »ADMINISTRATION«

| Codenummer | angezeigter Code | Bedeutung des Wertes |
|---|---|---|
| 31, 32, 33 | Hor, ELE, dIS | wie Block »MESSEN« |
| 34 | OP | Operateure, Meßequipe |
| 35 | b-E | Code für Meßbeginn oder Meßende |
| 36 | Pro | Projektnummer |
| 37 | dAt | Datum |
| 38 | t | Zeit |
| 39 | Inr | Instrumentennummer |

Datenblock »FEHLER«

| Codenummer | angezeigter Code | Bedeutung des Wertes |
|---|---|---|
| 41, 42, 43 | Hor, ELE, dIS | wie Block »MESSEN« |
| 44 | nrC | Nummer der als falsch vermuteten Messung, vom Aufbereitungsprogramm entsprechend zu behandeln |
| 45 | PnC | Nummer des als falsch eingemessen vermuteten Punktes, vom Aufbereitungsprogramm entsprechend zu behandeln |
| 46, 47, 48, 49 | | frei verfügbar |

Im einzelnen sind vier Typen von Datenblöcken vorgesehen:
Für die Punktnummer sind 12 Stellen vorgesehen. Sie wird nach jeder Registrierung automatisch um 1 erhöht. Bei Bedarf kann jederzeit eine beliebige Nummer über die Tastatur 17 als Punktnummer eingegeben werden.

Der Punktcode dient zum Kennzeichnen einer Punktart, unabhängig von der Punktnummer. Er ist mit Vorteil verwendbar beispielsweise bei der Aufnahme digitaler Geländemodelle, die keine Punktnummern erfordern.

Ein Satz-Anfang wird durch Eingabe einer neuen Stationsdefinition gekennzeichnet.

Die Datenspeicherung im Speicher 19 wird durch ein in einem Programmspeicher 23 enthaltenes Programm des Microprozessors (Microcomputer) gesteuert. Dieses Programm wird durch Druck auf die Taste STO des Tastenfeldes 17 in Gang gesetzt. Es bildet vor der Übertragung des Inhaltes von Puffer 20 in den Speicher 19 die Differenzen zwischen Puffer 20 und Puffer 21. Nur wenn diese Differenzen von Null verschieden sind, werden die entsprechenden neuen Werte vom Puffer 20 in den Speicher 19 übertragen. Anschließend werden die Werte unabhängig von der Differenz zwischen den Puffern, ohne Änderung des Puffers 20 noch in Puffer 21 übertragen, ausgenommen die Werte Nr. 7 bis 9, die für alle Typen von Datenblöcken nach der Speicherung Null gesetzt werden. Dadurch ist sichergestellt, daß der Operateur bei der Durchsicht eines Datenblockes in Puffer 20 für die Exzentrizitäten die Werte Null antrifft. Jedem Wert wird entsprechend dem gewählten Typ von Datenblock der Wertecode (Hor, ELE usw.) automatisch vorangestellt.

Zur Einsicht in gespeicherte Werte dient die erste Tastenzeile der Tastatur 17 (Fig. 3). Durch die Tastenkombination f-SE wird ein Suchprogramm aktiviert. Ein anschließend eingetasteter Wert wird nach Betätigung der Taste SE unter den gespeicherten Werten gesucht. Ist er gefunden, so wird er angezeigt. Nach nochmaliger Betätigung der Taste SE sucht das Programm weiter bis zum nächsten abgespeicherten gleichen Wert.

Betätigung der Taste SM veranlaßt die Anzeige des auf den gefundenen Wert im Speicher unmittelbar nachfolgenden Wertes, die Kombination f-SM die Anzeige des unmittelbar vorangehenden Wertes. Die Taste RE dient zum Wechseln in das Speicherprogramm.

Die Wahl eines bestimmten Typs von Datenblock erfolgt durch die Tastenkombinationen

    1 M: »MESSEN«
    2 M: »STATIONSDEFINITION«
    3 M: »ADMINISTRATION«
    4 M: »FEHLER«

Die Taste R dient dazu, die Werte Nr. 4 bis 9 aus dem Puffer 20 nacheinander zur Anzeige zu bringen. Die Betätigung der Taste CHS ändert das arithmetische Vorzeichen des gerade angezeigten Wertes, die Taste STO bewirkt die Speicherung und die Taste C die Nullsetzung der Anzeige.

Der Speicher 19 benötigt zur Aufrechterhaltung der gespeicherten Information einen Speisestrom. Der Gefahr einer vorzeitigen Erschöpfung einer im Datenspeicher 3 eingebauten Batterie ist durch Speisung aus einer externen Batterie über das Kabel 5' (Fig. 2) begegnet. Nach Beendigung der Messungen übernimmt eine in einem Behälter für den Datenspeicher 3 eingebaute Batterie die Stromversorgung.

Verwendet man die soweit beschriebene Vorrichtung zur Übertragung, Zuordnung und Speicherung von Daten in Verbindung mit einem an sich bekannten elektrooptischen Distanzmesser, der bei Bewegung des Zielreflektors die Messung automatisch kontinuierlich nachführt, so ergibt sich in dem Fachmann offensichtlicher Weise ein besonders einfaches Verfahren zum Abstecken, bei dem die erfindungsgemäß übertragenen Distanzen und Richtungen bei der Datenzuordnung mit Lageinformationen verglichen werden, die in einem Speichermedium vorliegen.

Bei dem bekannten Verfahren der Katastervermessung lassen sich erfindungsgemäße Vorrichtungen besonders zweckmäßig verwenden, wenn die Zusatzinformationen amtliche Daten über die aufzunehmenden Objekte betreffen. Beim Leitungskataster umfassen diese z. B. Art der Leitung, Durchmesser der Leitung, Tiefe der Leitung unter Boden usw. Die genannten Verwendungen liegen somit im Rahmen vorliegender Erfindung.

Variationen des beschriebenen erfindungsgemäßen Ausführungsbeispiels können zweckmäßig sein. So läßt sich ein mehr oder weniger großer Teil von Daten unter Vereinfachung des Datenspeichers 3 auch automatisch auf die Meßstation 1, 2 übertragen und dort verarbeiten. Auch können an Stelle der schiefen Distanz bereits Horizontaldistanz und Höhendifferenz im elektronischen Theodolit 1 gebildet und anschließend übertragen werden. Bei Verwendung von passiven (Würfelecken) Reflektoren am Zielpunkt ist lediglich ein kleiner Empfänger geringer Leistungsaufnahme zum Datenempfang erforderlich.

## Patentansprüche

1. Verfahren zur Messung der Relativlage zwischen einem ersten Punkt und einer Reihe von zweiten Punkten mit Übertragung elektromagnetischer Wellen zwischen den Punkten, bei dem am ersten Punkt aus den übertragenen elektromagnetischen Wellen Richtung und Distanz der zweiten Punkte ermittelt und die Meßwerte sowie weitere Informationen registriert werden, dadurch gekennzeichnet, daß die am ersten Punkt (31) ermittelten Distanz- und Richtungsinformationen durch Modulation der elektromagnetischen Wellen zu den zweiten Punkten (32) übertragenen und dort zusammen mit weiteren die zweiten Punkte betreffenden Informationen, die an diesen Punkten vorliegen oder dort erfaßt werden, registriert werden.

2. Vorrichtung zur Durchführung des Verfahrens nach Anspruch 1, mit Mitteln am ersten Punkt zur gerichteten Übertragung modulierter elektromagnetischer Wellen mit einer Wellenlänge zwischen 100 μm und 0,1 μm zu den zweiten Punkten, Mitteln an den zweiten Punkten zum Zurückstrahlen der modulierten Wellen zum ersten Punkt, Mitteln am ersten Punkt zur Gewinnung der Distanz zu den zweiten Punkten aus den übertragenen und zurückgestrahlten Wellen, ferner Mitteln zur Übertragung von die Distanz charakterisierenden Signalen zwischen den Punkten mittels modulierter elektromagnetischer Wellen und mit Mitteln am ersten Punkt zur Speicherung von Distanzwerten und Werten von Korrekturgrößen sowie zur Zuordnung der Korrekturgrößen zu den Distanzwerten, gekennzeichnet durch Mittel (3, 17) an den zweiten Punkten zur Speicherung der Distanzwerte und von die zweiten Punkte betreffenden weiteren Informationen, die an diesen Punkten vorliegen oder dort erfaßt werden, sowie zur Zuordnung der weiteren Informationen zu den Distanzwerten.

3. Vorrichtung zur Durchführung des Verfahrens nach Anspruch 1, mit Mitteln am ersten Punkt zur Messung von Horizontalrichtung und/oder Höhenwinkel der zweiten Punkte und Mitteln (2,2') zur Übertragung von diese Richtungswerte charakterisierenden Signalen zwischen den Punkten mittels modulierter elektromagnetischer Wellen und mit Mitteln am ersten Punkt zur Speicherung von Richtungswerten und Werten von Korrekturgrößen sowie zur Zuordnung der Korrekturgrößen zu den Richtungswerten, gekennzeichnet durch Mittel (3) an den zweiten Punkten zur Speicherung der Richtungswerte und von die zweiten Punkte betreffenden weiteren Informationen, die an diesen Punkten vorliegen oder dort erfaßt werden, sowie zur Zuordnung der weiteren Informationen zu den Richtungswerten.

4. Vorrichtung nach Anspruch 2, gekennzeichnet durch Mittel (2) am ersten Punkt zum Aufmodulieren der Distanzinformationen auf die der Distanzmessung dienenden elektromagnetischen Wellen.

5. Vorrichtung nach Anspruch 4, gekennzeichnet durch Mittel (2') an den zweiten Punkten zur Rückübertragung der empfangenen Distanzinformationen an den ersten Punkt durch Aufmodulieren auf die zurückgestrahlten elektromagnetischen Wellen.

6. Vorrichtung nach Anspruch 2 bis 5, gekennzeichnet durch die Kombination der Mittel (2, 1) zur Distanz- und Richtungsbestimmung am ersten Punkt und zur Übertragung von Distanz- und Richtungsinformationen zwischen den Punkten durch Aufmodulieren auf die der Distanzmessung dienenden elektromagnetischen Wellen.

7. Vorrichtung zur Messung der Relativlage zwischen einem ersten Punkt und einer Reihe von zweiten Punkten mit Mitteln zur Übertragung gerichteter elektromagnetischer Wellen mit einer Wellenlänge zwischen 100 μm und 0,1 μm zwischen dem ersten und den zweiten Punkten, Mitteln am ersten Punkt zur Gewinnung von Distanzen oder Richtungen zu den zweiten Punkten aus den gerichtet übertragenen Wellen, ferner Mitteln am ersten Punkt zur Speicherung von Distanz- oder Richtungswerten und Werten von Korrekturgrößen sowie zur Zuordnung der Korrekturgrößen zu den Distanz- oder Richtungswerten, gekennzeichnet durch Mittel zur separaten Übertragung von Distanz- oder Richtungswerte charakterisierenden Signalen zwischen den Punkten unter Verwendung von elektromagnetischen Wellen im Wellenlängenbereich zwischen 5 m und 15 m, sowie durch Mittel an den zweiten Punkten zur Speicherung der Distanz- oder Richtungswerte und von die zweiten Punkte betreffenden weiteren Informationen, die an diesen Punkten vorliegen oder dort erfaßt werden, sowie zur Zuordnung der weiteren Informationen zu den Distanz- oder Richtungswerten.

8. Vorrichtung nach Anspruch 7 zur Messung der Relativlage zwischen einem ersten und mehreren weiteren Punkten, dadurch gekennzeichnet, daß jedem weiteren Punkt ein separater Datenspeicher zugeordnet ist und daß jeweils der richtige Datenspeicher zur Speicherung der separat übertragenen Distanz- und/oder Richtungswerte durch den Empfang der zur Distanzmessung dienenden gerichteten Wellen aktiviert wird.

9. Vorrichtung nach Anspruch 6, dadurch gekennzeichnet, daß am ersten Punkt (31) eine oder mehrere der Größen Horizontaldistanz und Höhendifferenz gebildet und übertragen werden.

10. Vorrichtung nach Anspruch 2 bis 5, dadurch gekennzeichnet, daß die Mittel zur Distanzmessung (2, 2') zur Richtungsmessung (1) und zur Zuordnung und Speicherung (3) als separate, für sich funktionsfähige aber funktionell und räumlich miteinander kombinierbare Einheiten ein modular aufgebautes System bilden.

11. Vorrichtung nach Anspruch 10, dadurch gekennzeichnet, daß die Distanzmeßeinheit (2, 2') Mittel zum frequenz- und phasenmäßigen Anschluß der gerichtet ausgesendeten modulierten elektromagnetischen Wellen an eingestrahlte Wellen aufweist, derart daß sie als Mittel (2') an jedem zweiten Punkt zum aktiven Zurückstrahlen der vom ersten Punkt übertragenen Wellen verwendbar ist.

12. Vorrichtung nach einem der Ansprüche 2 bis 11, dadurch gekennzeichnet, daß die Distanz- und/oder Richtungsinformationen nach ihrer Gewinnung automatisch übertragen und an jedem zweiten Punkt der Zusatzinformation zugeordnet und gespeichert werden.

13. Vorrichtung nach Anspruch 12, dadurch gekennzeichnet, daß Informationsgewinnung, Übertragung und Speicherung bei Veränderungen der Distanz zwischen erstem und einem zweiten Punkt automatisch nachgeführt werden.

14. Verfahren nach Anspruch 1, gekennzeichnet durch seine Verwendung in der Katastervermessung.

15. Verfahren nach Anspruch 1, dadurch gekennzeichnet, daß die zu den zweiten Punkten (32) übertragenen Distanzen und Richtungen zum Abstecken der zweiten Punkte mit Lageinformationen verglichen werden, die in einem Speichermedium vorliegen.

## Claims

1. Method for measuring the relative position of a first point and a set of second points whereby electromagnetic waves are transmitted between the points, directions and distances of the second points are obtained from the transmitted electromagnetic waves at the first point and the obtained measured values as well as other informations are recorded at the first point, thereby characterized, that the information on distances and directions obtained at the first point (31) is transmitted to the second points (32) by modulating said electromagnetic waves and that said information on distances and directions is stored at the second points (32) in combination with additional information concerning the second points (32), which is present or is picked up at the second points (32).

2. Apparatus for carrying out the method according to claim 1, with means at the first point for directional transmission to the second points of modulated electromagnetic waves with a wavelength between 100 μm and 0,1 μm,
means at the second points to beam back to the first point said modulated waves,
means at the first point to obtain the distances to the second points from the transmitted and returned waves,
means for transmission of signals representing distance by means of modulated electromagnetic waves between the points and
means at the first point for recording values of distances and of quantities for correcting as well as for combination of the quantities for correcting with the values of distances, characterized by means (3, 17) at the second points for storing the values of distances and additional information concerning the second points, which is present or is picked up at the second points and means for coordination of the additional information with the values of distances.

3. Apparatus for carrying out the method according to claim 1, with means at the first point for measuring horizontal directions and/or elevation angles of the second points,
means (2, 2') for transmission, by means of modulated electromagnetic waves, of signals representing said directional values between the points and
means at the first point for recording directional values and values of quantities for correcting as well as for combination of the quantities for correcting with the directional values, characterized by means (3) at the second points for storing the directional values and additional information concerning the second points, which is present or is picked up at the second points and means for coordination of the additional information with the directional values.

4. Apparatus according to claim 2, characterized by means (2) at the first point for modulating upon the electromagnetic waves serving for distance measurement, the information on distances.

5. Apparatus according to claim 4, characterized by means (2') at the second points for transmission back to the first point by modulating upon the electromagnetic waves beamed back, the received information on distances.

6. Apparatus according to one of claims 2 to 5, characterized by a combination at the first point of the means (2, 1) for obtaining distances and directions and of the means for transmission of the information on distances and directions between the points by modulating upon the electromagnetic waves serving for distance measurement.

7. Apparatus for measuring the relative position of a first point and a set of second points, with means for transmission of directional electromagnetic waves with a wavelength between 100 μm and 0,1 μm between the first and the second points, means at the first point to obtain directions or distances to the second points from the directionally transmitted waves, means at the first point for recording values of distances or directions and of quantities for correcting as well as for combination of the quantities for correcting with the values of distances or directions, characterized by means for separate transmission of signals representing values of distances or directions between the points by means of electromagnetic waves with a wavelength in the range between 5 m and 15 m, as well as by means at the second points for storing the values of distances or directions and additional information concerning the second points, which is present or is picked up at the second points and means for coordination of the additional information with the values of distances or directions.

8. Apparatus according to claim 7 for measuring the relative position of a first point and several other points, characterized by a separate data memory associated with each of the other points, the fitting data memory being respectively activated for storage of the values of distances and/or directions transmitted separately by reception of the directional waves serving for distance measurement.

9. Apparatus according to claim 6, characterized by means at the first point (31) for generating and transmitting horizontal distance or elevational difference or both.

10. Apparatus according to one of claims 2 to 5, characterized by means (2, 2') for measuring distances, means (1) for measuring directions and means (3) for coordination and storage, each being separate and capable of functioning independently, but all together constituting a modular system of units that may be functionally and spatially combined with each other.

11. Apparatus according to claim 10, characterized by a distance measuring unit (2, 2') with means for synchronizing frequency and phase of modulation of the directionally transmitted, modulated electromagnetic waves with those of received waves, the unit (2') being adapted for actively beaming

0 007 886

back from each second point the waves transmitted from the first point.

12. Apparatus according to one of claims 2 to 11, characterized by means for automatic transmission of the obtained information on distances and/or directions and for automatic combination and storage at each second point, of this information with the additional information.

13. Apparatus according to claim 12, characterized by means for automatically tracking generation, transmission and storage of information during changes of the distance between the first and one of the second points.

14. Method according to claim 1, characterized by its application in cadastral surveying.

15. Method according to claim 1, thereby characterized, that the distances and directions transmitted to the second points (32) are compared with positional information stored in a memory, for setting out the points.

**Revendications**

1. Méthode de mesure de la position relative d'un premier point et un ensemble de second points avec transmission d'ondes électromagnétiques entre les points, directions et distances des seconds points étant obtenus au premier points à partir des ondes électromagnétiques transmises, et les valeurs mesurées obtenues ainsi que d'autres informations étant enregistrées au premier point, caractérisée en ce que les informations à propos des distances et des directions obtenues au premier point (31) sont transmises aux second points (32) par modulation des dites ondes électromagnétiques et que les dites informations à propos des distances et des directions sont stockées aux seconds points (32) en combinaison avec des informations additionelles concernant les seconds points, qui sont présentes ou qu'on relève aux second points (32).

2. Dispositif pour la mise en oeuvre de la méthode selon la revendication 1, avec des moyens au premier point pour la transmission directionelle d'ondes électromagnétiques modulées d'une longueur d'onde entre 100 μm et 0,1 μm aux seconds points, des moyens aux seconds points pour rayonner en retour au premier point les dites ondes modulées, des moyens au premier point pour obtenir les distances aux seconds points à partir des ondes transmises et retournées, des moyens pour la transmission de signaux représentant les distances entre les points au moyen d'ondes électromagnétiques modulées, et avec des moyens au premier point pour la mise en mémoire des valeurs des distances et de quantités de correction ainsi que pour une combinaison des quantités de correction avec les valeurs de distances, caractérisé en ce qu'il comprend: des moyens (3, 17) aux seconds points pour un stockage des valeurs des distances avec des informations additionelles concernant les seconds points, qui sont présentes ou qu'on relève aux seconds points et des moyens pour coordination des informations additionnelles avec les valeurs des distances.

3. Dispositif pour la mise en oeuvre de la méthode selon la revendication 1, avec des moyens au premier point pour la mesure de directions horizontales et/ou d'angles verticaux des seconds points, des moyens (2, 2') pour la transmission de signaux représentant les dites valeurs directionnelles entre les points au moyen d'ondes électromagnétiques modulées, et avec des moyens au premier point pour la mise en mémoire des valeurs directionnelles et de quantités de correction ainsi que pour une combinaison des quantités de correction avec les valeurs directionnelles, caractérisé en ce qu'il comprend:
des moyens (3) aux seconds points pour un stockage des valeurs directionnelles avec des informations additionnelles concernant les seconds points qui sont présentes ou qu'on relève aux seconds points et des moyens pour coordination des informations additionnelles avec les valeurs directionnelles.

4. Dispositif selon la revendication 2, caractérisé en ce qu'il comprend des moyens (2) au premier point pour une modulation des informations à propos des distances sur les ondes électromagnétiques utilisées pour la mesure des distances.

5. Dispositif selon la revendication 4, caractérisé en ce qu'il comprend des moyens (2') aux seconds points pour une transmission en retour au premier point des informations reçues à propos des distances par modulation sur les ondes électromagnétiques rayonnées en retour.

6. Dispositif selon l'une des revendications 2 à 5, caractérisé en ce qu'il comprend une combinaison des moyens (2, 1) au premier point pour la détermination des distances et des directions et des moyens pour la transmission des informations à propos des distances et des directions entre les points par modulation sur les ondes électromagnétiques utilisées pour la mesure des distances.

7. Dispositif pour la mesure de la position relative d'un premier point et un ensemble de seconds points, avec des moyens pour la transmission d'ondes électromagnétiques directionnelles d'une longueur d'onde entre 100 μm et 0,1 μm entre le premier point et les seconds points, des moyens au premier point pour obtenir des distances ou des directions aux seconds points à partir des ondes transmises directionnellement, des moyens au premier point pour la mise en mémoire des valeurs des distances, des valeurs directionnelles et de quantités de correction ainsi que pour une combinaison des quantités de correction avec les valeurs des distances ou les valeurs directionnelles, caractérisé en ce qu'il comprend:
des moyens pour une transmission à part de signaux représentant des valeurs de distance ou des

9

valeurs directionnelles, entre les points au moyen d'ondes électromagnétiques d'une longueur d'onde entre 5 m et 15 m ainsi que des moyens aux seconds points pour un stockage des valeurs de distance ou des valeurs directionnelles avec des informations additionnelles concernant les seconds points qui sont présentes ou qu'on relève aux seconds points et des moyens pour coordination des informations additionnelles avec les valeurs de distance ou les valeurs directionnelles.

8. Dispositif selon la revendication 7 pour la mesure de la position relative d'un premier point et plusieurs autres points, caractérisé en ce qu'il comprend un mémoire d'informations séparé associé à chacun des autres points, le mémoire approprié étant respectivement activé pour le stockage des valeurs de distance et/ou des valeurs directionnelles transmises à part, par la réception des ondes directionnelles utilisées pour la mesure des distances.

9. Dispositif selon la revendication 6, caractérisé en ce qu'il comprend des moyens au premier point (31) pour la formation et la transmission d'une ou plusieurs des quantités distance horizontale et dénivelée.

10. Dispositif selon l'une des revendications 2 à 5, caractérisé en ce qu'il comprend des moyens (2, 2') pour la mesure des distances, des moyens (1) pour la mesure des directions et des moyens (3) pour la coordination et pour le stockage, chacun étant séparé et capable de fonctionner indépendamment mais l'ensemble constituant un système modulaire d'unités qui peuvent être combinées entre eux en juxtaposition et en fonction.

11. Dispositif selon la revendication 10, caractérisé en ce qu'il comprend une unité (2, 2') de mesure de distances qui comporte des moyens pour la synchronisation en fréquence et en phase de modulation des ondes électromagnétiques modulées transmises directionnellement avec des ondes reçues, afin d'employer l'unité pour activement rayonner en retour à partir de chaqun des seconds points les ondes transmises par les moyens au premier point.

12. Dispositif selon l'une des revendications 2 à 11, caractérisé en ce qu'il comprend des moyens pour une transmission automatique des informations à propos des distances et/ou des directions obtenues et des moyens pour une coordination et un stockage automatique de ces informations avec les informations additionnelles à chaqun des seconds points.

13. Dispositif selon la revendication 12, caractérisé en ce qu'il comprend des moyens pour une poursuite automatique de l'obtention, de la transmission et du stockage de l'information pendant les changements de la distance entre le premier point et l'un des seconds points.

14. Méthode selon la revendication 1, caractérisé en ce qu'elle est utilisée pour le levé cadastral.

15. Méthode selon la revendication 1, caractérisé en ce que les valeurs des distances et les valeurs directionnelles transmises aux seconds points (32) sont comparées avec des informations de position qui sont présentes dans un mémoire, pour implanter les seconds points.

# Fig. 1

# Fig. 2

# Fig. 3